# EUROPÄISCHE PATENTSCHRIFT

(11) **EP 1 689 517 B1**
(45) Veröffentlichungstag und Bekanntmachung des Hinweises auf die Patenterteilung: **31.10.2007**
(21) Anmeldenummer: 04765330.8
(22) Anmeldetag: 17.09.2004
(51) Int. Cl.: B01D 69/10, B01D 63/06, B01D 69/12

(54) **VERFAHREN ZUM HERSTELLEN VON ROHRFÖRMIGEN MEMBRANEN**
METHOD FOR THE PRODUCTION OF TUBULAR MEMBRANES
PROCEDE POUR PRODUIRE DES MEMBRANES TUBULAIRES

(30) Priorität: 11.12.2003 DE 10358477
(43) Veröffentlichungstag der Anmeldung: 16.08.2006
(73) Patentinhaber: Poromedia Gmbh, 70199 Stuttgart (DE)
(72) Erfinder: KAMLEITER, Michael, 70199 Stuttgart (DE); GUDERNATSCH, Wilhelm-N., 70193 Stuttgart (DE)
(74) Vertreter: Bartels, Martin Erich Arthur
(86) Internationale Anmeldenummer: PCT/EP2004/010434
(87) Internationale Veröffentlichungsnummer: WO 2005/061081

(56) Entgegenhaltungen:
- EP-A- 1 059 114
- WO-A-03/076055
- DD-A- 228 452
- US-A- 5 342 434

## Beschreibung

Die Erfindung betrifft ein Verfahren zum Herstellen von rohrförmigen Membranen gemäß den Merkmalen des Oberbegriffes des Patentanspruches 1 sowie eine hierdurch hergestellte Membran.

Durch die EP 0 349 914 B1 ist ein Verfahren zum Herstellen von rohrförmigen Vlieskörpern aus einem Streifen eines thermoplastischen Trägervlieses bekannt, der zur Bildung eines Vliesrohres in Form einer Spirale derart aufgewickelt wird, dass die Längsränder des Streifens sich zumindest im gewickelten Bereich des Vliesrohres entlang einer Verbindungsnaht überlappen, wobei zur Bildung dieser Verbindungsnaht die Längsränder thermisch miteinander verschweißt werden. Durch das Aufwickeln des Streifens zum spiralförmigen Vlieskörper entsteht ein Hohlstab, der an seinem freien Ende eine Austrittsöffnung aufweist, über die eine Beschichtungslösung auf die Innenwand des gewickelten Vliesrohres aufbringbar ist, wobei durch den anschließenden Kontakt mit einer Koagulationslösung eine rohrförmige Membran gebildet wird.

Dahingehende Rohrmembrane sind insbesondere für die Ultra- und Nanofiltration geeignet, wobei die dahingehenden Membranen mikroporöse Filtermedien ausbilden, deren Durchtrittsporen derart klein sind, dass sie nicht nur eine Barriere für Partikel jeglicher Art und Form bilden wie Verunreinigungen, Schwermetalle usw. sondern auch für sämtliche Mikroorganismen, beispielsweise in Form von Bakterien, Parasiten und Viren. Die dahingehend aktive Schicht der Membranen wird in der Fachsprache auch als semipermeable Schicht bezeichnet. Nachteilig bei den derart hergestellten Rohrmembranen ist, dass diese häufig unter der Druckbeanspruchung des zu filtrierenden Fluids im Bereich der thermischen Verbindungsnähte aufreißen und demgemäß versagen. Um dem zu begegnen, ist in der deutschen Offenlegungsschrift 2 255 989 zwar bereits vorgeschlagen worden, die im übrigen auch dünnen und zerbrechlichen, halb durchlässigen Membranrohre außenumfangseitig mit einer Verstärkung in Form eines Faserflechtgebildes zu umgeben, um dergestalt dem hohen hydraulischen Innendruck entgegen zu wirken; allein das dahingehend bekannte Verfahren ist aufwendig und mithin teuer in der Herstellung und das unmittelbar an der halbdurchlässigen Membran anliegende Verstärkungs-Faserflechtgebilde beeinflußt nachteilig das Durchfluß- und Filtrationsverhalten der Rohrmembran.

Zur Vermeidung der Problematik des ungewollten Auftrennens der thermisch hergestellten Verbindungsnähte bei einer spiralförmig aufgewickelten Rohrmembran aus einem streifenförmigen Fließkörper unter der Einwirkung des anstehenden Fluiddruckes schlägt die DE 199 09 930 A1 einen tubulären Verbund aus einem Geflecht aus Faden-Bündeln und/oder Drähten, vorzugsweise in Form eines elektronenleitenden Materials und einer darüber angeordneten Schicht eines ionenleitenden Materials, als Brennstoffzellenelement vor. Bei dieser bekannten Lösung wird unter anderem zum Herstellen einer sogenannten PEM-Brennstoffzelle vorgeschlagen, die rohrförmige Innenelektrode bestehend aus Kohlefasern und/oder Metalldrähten mittels einer Flechtmaschine zu erzeugen. Dieses tubuläre Geflecht läuft zur Zentrierung auf einem Dorn bis zu einer Auftragsdüse für die Katalysatorbeschichtung, wobei der Düsendurchmesser die Dicke der Katalysatorschicht bestimmt. Nach einer kurzen Trockenstrecke durch z. B. Keramikheizkörper durchläuft das beschichtete Geflecht eine Ringspaltdüse über die die ionenleitfähige Membran in Form einer Polymer-Lösung aufgetragen wird. Diesem Schritt schließt sich eine längere Trockenstrecke zur Austreibung des Lösemittels an. Nachfolgend wird eine zweite Katalysatorschicht mit einer Auftragsdüse aufgebracht und danach wird die Außenelektrode um die noch pastöse Katalysatorschicht geflochten. Die pastöse Konsistenz der Katalysatorschicht ermöglicht ein Eindringen der Geflechtstränge und damit einen innigen Verbund zwischen Katalysator und Elektrode. Wird dieser tubuläre Verbund zumindest teilweise bestehend aus einem flächigen Fadengeflecht entsprechend hohen Fluiddrücken ausgesetzt, ist nicht auszuschließen, dass aufgrund der auftretenden Längs- und Querzugspannungen im Fadengeflecht sich die Fäden im Verbund gegeneinander verschieben, und dergestalt kann es zu unerwünschten Verstreckeffekten kommen, insbesondere auch bei der Herstellung des Geflechtes vor der eigentlichen Beschichtung mit dem Membranmaterial, was zur Folge hat, dass die bekannte rohrförmige Membran eine Gestalt einnimmt, insbesondere sich im Durchmesserbereich derart ändert, dass sie für den späteren Einsatzzweck untauglich werden kann.

Durch die WO 03/076055 A ist ein Verfahren zur Herstellung gewebeverstärkter kapillarförmiger Membranen bekannt, insbesondere für die Ultrafiltration, bei dem ein Gewebeschlauch mit einer Polymerlösung beschichtet und durch ein Fällungsbad geführt wird, wobei in dem Fällungsbad eine Umwandlung der Polymerlösung in eine mikroporöse Schicht erfolgt und eine durch den Gewebeschlauch verstärkte Membran gebildet wird. Die dahingehend hergestellte Membran ist also in der Art eines Kompositsystems aufgebaut bestehend aus dem Gewebeschlauch und der mikroporösen Schicht.
Im Stand der Technik sind weiter grundsätzlich Verfahren zur Herstellung von dahingehenden Kompositsystemen bekannt, wobei solche Kompositsysteme neben Gewirken aus sog. "Nonwoven" und geflochtenen ("braided") sowie gewebten ("woven") Stützkörpern auch geknüpfte ("knitted", "crocheted") Gewirke mit einbeziehen. Der Einsatz dahingehender Kompositsysteme besteht in der Verbesserung der mechanischen Eigenschaften, wobei die DD 228 452 A ein Kompositsystem betrifft mit einem spezifischen Schichtaufbau, der spezielle Stofftrennaufgaben erfüllt und insbesondere die aufgebrachte polymere Membranschicht bei Druckbelastung gegen Druckverformungen schützt und dennoch eine gute Ableitung des Permeats gewährleistet. Hierfür wird ein textiler Rohrkörper, gebildet aus einem Rechts-Links-Kettengewirke, eingesetzt oder ein Schichtverbundstoff, der nach einer chemischen Versteifung von der Rückseite her Füllstoffe einlagert, die nach Aufbringen des Membran bildenden Polymers auf die Oberseite wieder ausgewaschen werden. Ein dahingehendes Rechts-Links-Kettengewirke ist auch Gegenstand der US-A-5 342 434, das entsprechend beschichtet, wasserdampfdurchlässig ist und im Bereich der textilen Bekleidung unter der Markenbezeichnung "Goretex" bekannt geworden ist.
Ein vergleichbares Gewirke für den Einsatz bei Rohrmembranen ist auch in der EP-A- 1 059 114 aufgezeigt, wobei die einzelnen Maschen auf senkrechten und waagerechten Verbindungslinien liegen und durch Querfäden miteinander verknüpft sind. Jedoch kann es auch bei dieser bekannten Lösung zu den bereits beschriebenen unerwünschten Verstreckeffekten kommen, insbesondere bei der Herstellung des Gewirkes vor der eigentlichen Beschichtung mit dem Membranmaterial.

Ausgehend von diesem Stand der Technik liegt der Erfindung die Aufgabe zugrunde, die bekannten technischen Verfahrenslösungen zum Herstellen von rohrförmigen Membranen dahingehend weiter zu verbessern, dass mit hoher Produktionsgeschwindigkeit und zu niedrigen Kosten funktionssicherer Rohrmembranen zu erhalten sind, die weder während ihrer Herstellung noch im späteren Betrieb unerwünschte Verstreckeffekte mit Änderung der Membrangeometrien aufweisen. Eine dahingehende Aufgabe löst ein Verfahren mit den Merkmalen des Patentanspruches 1 in seiner Gesamtheit.

Dadurch, dass gemäß dem kennzeichnenden Teil des Patentanspruches 1 die stegartigen Verbindungslinien ein Längsfadensystem bilden, ergibt sich ein sehr kostengünstiges Herstellverfahren mit dem sich sehr hohe Ausstoßraten an rohrförmigen Membranen erhalten lassen. Mit dem erfindungsgemäßen Verfahren lassen sich vor dem Auftragen des Membranmaterials Rohrkörper erhalten, in der Art eines Leitergestrickes oder Rundleitergestrickes und mit dem genannten Leitergestrickmuster lassen sich etwaig auftretende Längszugspannungen mittels durchlaufender Längsfäden entlang der stegartigen Verbindungslinien sicher aufnehmen. Die Umschlingung an den Kreuzungspunkten des Leitergestrickmusters, also an den Stellen der festen Verknüpfung zwischen den Verbindungslinien und den genannten Querverbindungen, vermeidet das Verschieben der Fadensysteme gegeneinander und der beschriebene ungewollte Verstreckeffekt während der Beschichtung ist minimiert, wobei die derart gewebeverstärkte Filtrationskapillare sehr hohen Innendrücken und mechanisch aufgebrachten Längszugskräften widersteht.

Im Gegensatz zu den geflochtenen Rohrkörpern, bei denen sich die Flechtbahnen unter entsprechender Beanspruchung oder Last gegeneinander verschieben können, kann es aufgrund der Umschlingung an den Stellen der festen Verknüpfung zwischen Verbindungslinien und Querverbindungen nicht zu Verschiebungen kommen, so dass etwaige Längs- oder Querbewegungen des Fadensystems allein durch die Eigenelastizität des eingesetzten Fadenmaterials bestimmt sind. Insoweit ergeben sich bei Einsatz des erfindungsgemäßen Verfahrens sehr form- und druckstabile Rohrkörpergebilde, sowohl bei der Herstellung der Membranrohre als auch bei deren späterer Verwendung im Ultra- oder Nanofiltrationsbereich von Fluiden jedweder Art einschließlich in den Bereichen Wasser- und Getränkebehandlung.

Bei einer besonders bevorzugten Ausführungsform des erfindungsgemäßen Verfahrens wird der als Leitergestrick ausgebildete Rohrkörper mittels einer maschinellen Häkeleinrichtung erstellt, wobei jedem eingesetzten Faden eine eigene Haken- oder Häkelnadel zugeordnet wird. Beim Häkeln handelt es sich dem Grunde nach um ein Handarbeitsverfahren, wobei mit Hilfe der Haken- oder Häkelnadel der Faden "in der Luft", also ohne Unterlage zu Schlingen geformt wird, wobei die ineinander hängenden Schlingen zu Mustern zusammengefügt werden können. Über die Häkeleinrichtung ist es möglich, Stütz- oder Haltefäden durchgehend längs den stegartigen Verbindungslinien einzubringen, um dergestalt eine Art Grundgerüst zu schaffen, um dann die weiteren Fäden für die Umschlingung an den Kreuzungspunkten längs der Verbindungslinien einzusetzen sowie zum Herstellen des Querfadenverbundes zwischen den genannten Verbindungslinien.

Vorzugsweise wird der Rohrkörper durch Häkeln dabei derart erstellt, dass zwischen den einzelnen Querverbindungen Fluiddurchtrittsstellen hoher Durchflußrate ausgebildet werden, wobei die stegartigen Verbindungslinien fluiddicht oder mit geringerer Durchflußrate ausgebildet sind. Bei einer besonders bevorzugten Ausführungsform des erfindungsgemäßen Verfahrens, werden die genannten Fäden (Monofile oder Multifile) ausgewählt aus der Gruppe
- der Kunststoffmaterialien wie Polyester, Polyaramide, andere Polymere; Carbon, Kevlar etc. oder
- der Metallwerkstoffe (Drähte) wie Nickel, Platin, Palladium, Gold, Silber, rostfreie Stähle etc. oder
- der katalytisch aktiven Werkstoffe wie Ruthenium, Rhodium, Iridium, Nickel etc. oder
- der sonstigen Werkstoffe wie Celluloseacetat, Glasfasern, Graphitpulver, Aktivkohle etc. oder
aus Mischungen und Verbindungen der vorstehend genannten Gruppen.

Die vorstehend genannte Auflistung macht deutlich, dass im Sinne des erfindungsgemäßen Verfahrens der Begriff Faden weit zu ziehen ist, und neben den üblichen Monofilament- und Multifilamentfäden andere linienförmige Elemente mit einschließt wie Garne, Drähte oder stabartige, auch aus Pulvern aufgebaute Komponenten.

Die benachbarten Querverbindungen die derart zwischen zwei Verbindungslinien angeordnet werden, begrenzen zwischen sich einen Winkel von 10° bis 70°, vorzugsweise von etwa 25° bis 45°, besonders bevorzugt von etwa 30°.

Bei einer weiteren besonders bevorzugten Ausführungsform des erfindungsgemäßen Verfahrens wird der Rohrkörper mit einer Membran aktivierbaren Substanz beschichtet, die durch ein Fällungsbad geführt wird, wobei eine Umwandlung der Substanz in eine mikroporöse Membranschicht erfolgt.

Als Membranmaterialien kommen insbesondere solche aus der Gruppe der Kunststoffmaterialien in Frage wie Polyethersulfon (PES), Polysulfon (PSU), Polyacrylnitril (PAN) oder Polyvinylidenfluorid (PVDF).

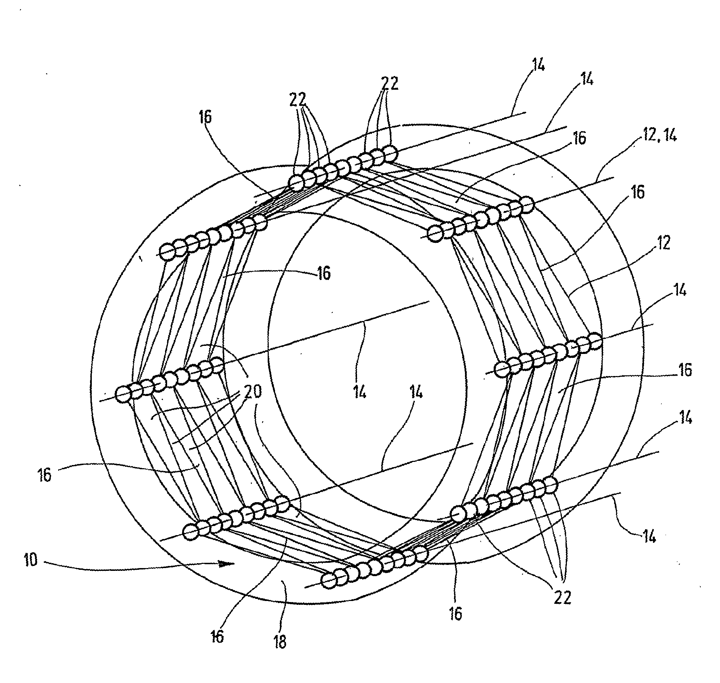

Im folgenden wird das erfindungsgemäße Verfahren anhand eines Ausführungsbeispieles nach der Zeichnung näher erläutert. Dabei zeigt die einzige Figur in prinzipieller und nicht maßstäblicher Darstellung eine stirnseitige, perspektivische Vorderansicht auf einen Ausschnitt der rohrförmigen Membran in deutlich vereinfachter Wiedergabe.

Das erfindungsgemäße Verfahren zum Herstellen von rohrförmigen Membranen sieht vor, dass ein als Ganzes mit 10 bezeichneter Rohrkörper aus mehreren Fäden 12 derart aufgebaut wird, dass entlang von stegartigen Verbindungslinien 14 eine feste Verknüpfung zumindest eines Teils der genannten Fäden 12 erfolgt, wobei zwischen den stegartigen Verbindungslinien 14 zumindest ein Teil der Fäden 12 die Querverbindung 16 zwischen den einander benachbarten Verbindungslinien 14 vornimmt, und wobei ein vorgebbares Membranmaterial 18 auf dem Rohrkörper 10 aufgebracht wird. Die stegartigen Verbindungslinien 14 bilden dabei eine Art Längsfadensystem aus, dass über die Querfäden 12 der jeweiligen Querverbindung 16 eine Art Leitergestrick, insbesondere Rundleitergestrick, ausbildet.

Für den Erhalt des dahingehenden Leitergestrickes wird der Rohrkörper 10 mittels einer industriellen Häkeleinrichtung erzeugt, wobei jedem eingesetzten Faden eine eigene Haken- oder Häkelnadel zugeordnet wird. Da dahingehende maschinelle Häkeleinrichtungen Stand der Technik sind, wird insoweit auf die Häkelerstellung des Rohrkörpers 10 nicht weiter Bezug genommen. Jedenfalls wird der Rohrkörper 10 durch das genannte Häkeln derart erstellt, dass zwischen den einzelnen Querverbindungen 16 in Form der dahingehenden Querfäden12 Fluiddurchtrittsstellen 20 hoher Durchflußrate gebildet werden, wobei die stegartigen Verbindungslinien 14 als Längsfadensystem fluiddicht oder mit demgemäß geringerer Durchflußrate ausgebildet werden. Der einfacheren Darstellung wegen wurde in der Figur die Umschlingung der Fäden 12 von Querverbindungen 16 mit den stegartigen Verbindungslinien 14 als Verknüpfungskugeln 22 dargestellt, wobei in Wirklichkeit bedingt durch das Häkelverfahren die dahingehenden Kugeln 22 durch miteinander verbundene Maschen oder Knotenpunkte gebildet sind, und wobei die gebildeten Verbindungsmaschen entlang den Verbindungslinien 14, die beidseitig also rechts und links zu den Fäden 12 der Querverbindungen 16 übergehen, zusätzliche Längsfäden 12 mit aufweisen, die zusätzlich die Stabilität und die Längszugfestigkeit für den Rohrkörper 10 erhöhen.

Die eingesetzten Fäden 12 für die Querverbindungen 16 sowie für deren Verknüpfung miteinander entlang den Stellen 22 im Übergangsbereich zu den stegartigen Verbindungslinien 14 bestehen aus multifilen Kunststofffäden, beispielsweise aus Polyester oder Polyaramiden, wobei hier auch andere Polymere zum Einsatz kommen können. Zur Erhöhung der Festigkeit sind jedoch die Längsfäden entlang der stegartigen Verbindungslinien 14 aus Carbonfasermaterialien aufgebaut. Will man beispielsweise die dahingehende Rohrmembran als Brennstoffzellenelement oder dergleichen einsetzen, besteht die Möglichkeit einen Teil der Fäden aus einem elektronenleitenden Material aufzubauen und einen anderen Teil der Fäden aus einem ionenleitenden Material. Ferner kann das Fadensystem das Ionenleitend wirkt mit einer Katalysatorschicht versehen werden, die zusätzlich mit Hydrophobierungsmitteln und/oder Protonenleitermaterial zusätzlich versehen sein kann. Auch besteht dergestalt die Möglichkeit die beschriebene Rohrmembran als bipolare lonentauschermembran zu verwenden, um dergestalt Milchsäure oder dergleichen zu gewinnen. Durch Einsatz von Metalldrähten als Fadensystem läßt sich auch das elektrische Ladungspotentialvermögen der Rohrmembran mit vorgeben.

Im vorliegenden Fall besteht der Rohrkörper 10 aus acht Verbindungslinien 14 sowie aus acht Querverbindungsflächen 16. Als besonders vorteilhaft haben sich jedoch Rohrkörper 10 (nicht dargestellt) erwiesen, die aus sechs Verbindungslinien 14 und sechs Querverbindungen 16 aufgebaut sind. Minimal Voraussetzung zum Aufbau eines im Querschnitt dreieckförmigen Rohrkörpers 10 (nicht dargestellt) ist, diesen aus drei Verbindungslinien 14 mit drei Querverbindungen 16 aufzubauen.

Um den derart hergestellten Rohrkörper 10 nunmehr mit einer Membran aktivierbaren Substanz zu beschichten, wird dieser durch ein Fällungsbad geführt, wobei eine Umwandlung der Substanz in eine mikroporöse Membranschicht erfolgt. Ein dahingehendes Verfahren ist beispielhaft in der WO 03/076055 A1 offenbart, so dass an dieser Stelle hierauf im Detail nicht mehr näher eingegangen wird. Die bekannte Lösung nach der WO-Veröffentlichung betrifft ein Verfahren zur Herstellung gewebeverstärkter kapillarförmiger Membranen, insbesondere für die Ultrafiltration, bei denen jeweils ein Gewebeschlauch mit einer Polymerlösung beschichtet und durch ein Fällungsbad geführt wird, wobei in dem Fällungsbad eine Umwandlung der Polymerlösung in eine mikroporöse Schicht erfolgt. Derart wird eine durch den Gewebeschlauch verstärkte Membran gebildet. Dabei durchläuft der mit der Polymerlösung beschichtete Gewebeschlauch das Fällungsbad ohne mechanische Berührung von oben nach unten und tritt durch eine unterseitige Düse aus. Durch die Düse fließt Flüssigkeit ab, welche eine den Lauf des beschichteten Gewebeschlauches stabilisierende Zugkraft auf die das Fällungsbad verlassende Kapillarmembran ausübt. Das dahingehende Beschichtungsverfahren ist nur beispielhaft herausgegriffen und es gibt eine Vielzahl anderer Beschichtungsverfahren einschließlich Tauchbadverfahren die hier zum Einsatz kommen können. Als Membranmaterial wird ein solches aus der Gruppe der Kunststoffmaterialien ausgewählt wie Polyethersulfon (PES), Polysulfon (PSU), Polyacrylnitril (PAN) oder Polyvinylidenfluorid (PVDF).

Die erfindungsgemäße Rohrmembran läßt sich fortlaufend und somit kostengünstig herstellen, d. h. der Rohrkörper 10 wird permanent über das Häkelverfahren bereitgestellt für das anschließende Beschichtungsverfahren mit dem Membranmaterial 18. Aufgrund der Ausgestaltung des Filtermateriales in Form eines Leitergestrickes bzw. Rundleitergestrickes durch Einsatz der konventionellen Häkeltechnik, entsteht ein Filterrohr, bei dem die bei der Filtration auftretenden Längszugspannungen von den durchlaufenden Längsfäden entlang den stegartigen Verbindungslinien 14 aufgenommen werden, wobei die Spannungen am Umfang durch die querverlaufenden Fäden 12 des Gewebelagenverbundes mittels der flächenförmigen Querverbindungen 16 sicher aufgenommen sind. Die Umschlingung an den Kreuzungspunkten (Kugeln 22) vermindert das Verschieben der Fäden 12 gegeneinander, so dass unerwünschte Verstreckeffekte sowohl in Längsrichtung als auch in Querrichtung des Rohrkörpers 10 während der Beschichtung mit dem Membranmaterial deutlich minimiert sind und die derart gewebeverstärkte Filtrationskapillare widersteht sehr hohen Innendrücken und Längszügen bei der Filtration. Als Fadenstärke können hierbei Fäden 12 mit einem Durchmesser von 20 bis 200 µm eingesetzt werden und die Fadenanzahl entlang der Linien 14 liegt vorzugsweise bei drei bis sechs Stück.

Praktische Versuche haben ergeben dass bei vergleichbaren Dimensionierungen durch die gewählte technische Lösung als Rundleitergestrick Zugfestigkeiten von 100 N/mm² erreichbar sind bei einer Reißdehnung von 1 bis 5% und im dynamischen Drucktest halten solche Rohre einem Berstdruck von ca. 30 bis 60 bar ohne weiteres Stand, wobei eine Verkürzung des Rohres von nur 1 % beobachtet wird, so dass eine sichere Festlegung des als Rundleitergestrick ausgebildeten erfindungsgemäßen Membranrohres in einer Haltevorrichtung, insbesondere in Form mindestens eines Moduls (nicht dargestellt) einer Gesamtfiltrationsanlage gewährleistet ist.

## Patentansprüche

1. Verfahren zum Herstellen von rohrförmigen Membranen, wobei ein Rohrkörper (10) aus mehreren Fäden (12) derart aufgebaut wird, dass entlang von stegartigen Verbindungslinien (14) eine feste Verknüpfung zumindest eines Teils der Fäden (12) erfolgt, wobei zwischen den stegartigen Verbindungslinien (14) zumindest ein Teil der Fäden (12) die Querverbindung (16) zwischen den einander benachbarten Verbindungslinien (14) vornimmt, und wobei ein vorgebbares Membranmaterial (18) auf den Rohrkörper (10) aufgebracht wird, **dadurch gekennzeichnet, dass** die stegartigen Verbindungslinien (14) ein Längsfadensystem bilden.

2. Verfahren nach Anspruch 1, **dadurch gekennzeichnet, dass** der Rohrkörper (10) mittels einer Häkeleinrichtung erstellt wird und dass jedem eingesetzten Faden eine eigene Haken- oder Häkelnadel zugeordnet wird.

3. Verfahren nach Anspruch 2, **dadurch gekennzeichnet, dass** der Rohrkörper (10) durch Häkeln derart erstellt wird, dass zwischen den einzelnen Querverbindungen (16) Fluiddurchtrittsstellen (20) hoher Durchflußrate ausgebildet werden, und dass die stegartigen Verbindungslinien (14) fluiddicht oder mit geringer Durchflußrate ausgebildet werden.

4. Verfahren nach einem der Ansprüche 1 bis 3, **dadurch gekennzeichnet, dass** die Fäden (Monofile oder Multifile) ausgewählt werden aus der Gruppe
- der Kunststoffmaterialien wie Polyester, Polyaramide, andere Polymere, Carbon, Kevlar oder
- der Metallwerkstoffe (Drähte) wie Nickel, Platin, Palladium, Gold, Silber, rostfreier Stahl oder
- der katalytisch aktiven Werkstoffe wie Ruthenium, Rhodium, Iridium, Nickel oder
- der sonstigen Werkstoffe wie Celluloseacetat, Glasfasern, Graphit pulver, Aktivkohle oder
aus Mischungen und Verbindungen der vorstehend genannten Gruppen.

5. Verfahren nach einem der Ansprüche 1 bis 4, **dadurch gekennzeichnet, dass** die benachbarten Querverbindungen (16) derart zwischen zwei Verbindungslinien (14) angeordnet werden, dass diese zwischen sich einen Winkel von 10 bis 70°, vorzugsweise von etwa 30°, einschließen.

6. Verfahren nach einem der Ansprüche 1 bis 5, **dadurch gekennzeichnet, dass** der Rohrkörper (10) aus mindestens drei vorzugsweise aus sechs Verbindungslinien (14) aufgebaut wird, zwischen denen sich drei vorzugsweise sechs Flächen an Querverbindungen (16) erstrecken, auf denen das Membranmaterial vermehrt aufgetragen wird.

7. Verfahren nach einem der Ansprüche 1 bis 6, **dadurch gekennzeichnet, dass** der Rohrkörper (10) mit einer membranaktivierbaren Substanz beschichtet wird, die durch ein Fällungsbad geführt wird, wobei eine Umwandlung der Substanz in eine mikroporöse Membranschicht erfolgt.

8. verfahren nach einem der Ansprüche 1 bis 7, **dadurch gekennzeichnet, dass** als Membranmaterialien solche aus der Gruppe der Kunststoffmaterialien ausgewählt werden wie Polyethersulfon, Polysulfon, Polyacrylnitril oder Polyvinylidenfluorid.

9. Rohrmembran hergestellt nach einem Verfahren nach einem der Patent ansprüche 1 bis 8, **dadurch gekennzeichnet, dass** der Rohrkörper (10) aus mehreren Fäden (12) derart aufgebaut ist, dass entlang von stegartigen Verbindungslinien (14), die ein Längsfadensystem bilden, eine feste Verknüpfung zumindest eines Teils der Fäden (12) vorliegt, dass zwischen den stegartigen Verbindungslinien (14) zumindest ein Teil der Fäden (12) die Querverbindung (16) zwischen den einander benachbarten Verbindungslinien (14) bildet, und dass ein vorgebbares Membranmaterial (18) auf den Rohrkörper (10) aufgebracht ist.

## Claims

1. Method for producing tube-shaped membranes, whereby a tube body (10) consisting of several threads (12) is constructed in such a way that a firm connection of at least a part of the threads (12) is created along bridge-like connection lines (14), whereby at least a part of the threads (12) realises the transverse connection (16) between the bridge-like connection lines (14) between adjacent connection lines (14), and whereby a pre-determined membrane material (18) is applied to the tube body (10), **characterised in that** the bridge-like connection lines (14) form a longitudinal thread system.

2. Method according to Claim 1, **characterised in that** the tube body (10) is created by means of a crocheting device, and **in that** each thread used is associated with its own hook or crocheting needle.

3. Method according to Claim 2, **characterised in that** the tube body (10) is created by means of crocheting in such a way that fluid passages (20) with a high flow rate are created between the individual transverse connections (16), and **in that** the bridge-like connection lines (14) are fluid tight, or formed with a low flow rate.

4. Method according to one of the Claims 1 to 3, **characterised in that** the threads (monofilaments or multifilaments) are selected from the group
- of plastic materials such as polyester, polyaramides, other polymers, carbon, Kevlar etc; or
- of the group of metal materials (wires) such as nickel, platinum, palladium, gold, silver, stainless steel wires etc; or
- the group of catalytically active materials such as ruthenium, rhodium, iridium, nickel etc.; or
- of other materials such as cellulose acetate, glass fibre, graphite powder, active carbon etc.; or
from mixtures and compounds of the groups listed above.

5. Method according to one of the Claims 1 to 4, **characterised in that** the adjacent transverse connections (16) are arranged between two connection lines (14) in such a way that they enclose the same between themselves at an angle of 10 to 70°, and preferably 30°.

6. Method according to one of the Claims 1 to 5, **characterised in that** the tube body (10) is constructed from at least three, and preferably six connection lines (14), between which three, and preferably six spatial transverse connections (16) extend, into which the membrane material is applied.

7. Method according to one of the Claims 1 to 6, **characterised in that** the tube body (10) is coated with a membrane activating substance, which is passed through a precipitation bath, whereby a transformation of the substance into a microporous membrane layer occurs.

8. Method according to one of the Claims 1 to 7, **characterised in that** the membrane material is selected from the group of plastic materials such as polyether sulfate, polysulfonate, polyacryl nitrile, or polyvinylidene fluoride.

9. Tube membrane produced by means of a method according to one of the Claims 1 to 8, **characterised in that** the tube body (10) is constructed of several threads (12) in such a way that a firm connection of at least a part of the threads (12) is created along bridge-like connection lines (14) forming a longitudinal thread system between said connection lines (14), **in that** at least a part of the threads (12) creates the transverse connection (16) between the adjacent connection lines (14), and **in that** a pre-determined membrane material (18) is applied to the tube body (10).

## Revendications

1. Procédé pour fabriquer des membranes tubulaires, dans lequel
- un corps tubulaire (10) est formé à partir de plusieurs fils (12) de telle manière qu'une liaison solide d'au moins une partie des fils (12) a lieu le long de lignes de jonction (14) en forme de nervure,
- entre les lignes de jonction (14) en nervure au moins une partie des fils (12) fait la jonction transversale (16) entre les lignes de jonction (14) voisines les unes des autres
- et un matériau (18) prédéfinissable de membrane est appliqué sur le corps tubulaire (10),
**caractérisé en ce que** les lignes de jonction (14) en nervure forment un système de fils longitudinaux.

2. Procédé selon la revendication 1, **caractérisé en ce que** le corps tubulaire (10) est produit par un dispositif à crochets et qu'une aiguille à bec ou un crochet particulier est associé à chacun des fils utilisés.

3. Procédé selon la revendication 2, **caractérisé en ce que** le corps tubulaire (10) est produit en crochetant de telle manière que des points de passage de fluide (20) dont le débit est grand sont formés entre les différentes jonctions transversales (16) et que les lignes de jonction (14) en nervure sont étanches aux fluides ou ont un petit débit.

4. Procédé selon l'une des revendications 1 à 3, **caractérisé en ce que** les fils (monofils ou multifils) sont choisis parmi le groupe
- des matières plastiques comme le polyester, le polyaramide, d'autres polymères, le carbone, la fibre aramide ou
- des matériaux métalliques (fils métalliques) comme le nickel, le platine, le palladium, l'or, l'argent, l'acier inoxydable ou
- des matériaux actifs par catalyse comme le ruthénium, le rhodium, l'iridium, le nickel ou
- des autres matériaux comme l'acétate de cellulose, les fibres de verre, la poudre de graphite, le charbon actif ou des mélanges et des composés des groupes ci-dessus mentionnés.

5. Procédé selon l'une des revendications 1 à 4, **caractérisé en ce que** les jonctions transversales (16) voisines sont placées entre deux lignes de jonction (14) de telle manière qu'elles font entre elles un angle de 10 à 70°, de préférence d'environ 30°.

6. Procédé selon l'une des revendications 1 à 5, **caractérisé en ce que** le corps tubulaire (10) est formé par au moins trois, de préférence six, lignes de jonction (14) entre lesquelles s'étendent de préférence six surfaces de jonction transversales (16) sur lesquelles est appliqué le matériau de membrane multiplié.

7. Procédé selon l'une des revendications 1 à 6, **caractérisé en ce que** le corps tubulaire (10) est revêtu d'une substance qui peut être activée par une membrane et qui est passée dans un bain de précipitation, la substance étant alors convertie en couche microporeuse de membrane.

8. Procédé selon l'une des revendications 1 à 7, **caractérisé en ce que** les matériaux de la membrane sont choisis parmi le groupe des matières plastiques comme de la polyéthersulfone, de la polysulfone, du polyacrylonitrile ou du poly(fluorure de vinylidène).

9. Membrane tubulaire fabriquée suivant un procédé selon l'une des revendications 1 à 8, **caractérisée en ce que** le corps tubulaire (10) est formé à partir de plusieurs fils (12) de telle manière qu'une liaison solide d'au moins une partie des fils (12) se trouve le long de lignes de jonction (14) en nervure qui forment un système de fils longitudinaux, qu'entre les lignes de jonction (14) en nervure au moins une partie des fils (12) forme la jonction transversale (16) entre les lignes de jonction (14) voisines les unes des autres et qu'un matériau (18) prédéfinissable de membrane est appliqué sur le corps tubulaire (10).
